Europäisches Patentamt

European Patent Office

Office européen des brevets

(19)

(11) Veröffentlichungsnummer: **0 263 387**
**A2**

(12) **EUROPÄISCHE PATENTANMELDUNG**

(21) Anmeldenummer: **87114104.0**

(22) Anmeldetag: **26.09.87**

(51) Int. Cl.4: **G01T 1/18**

(30) Priorität: **01.10.86 DE 3633325**

(43) Veröffentlichungstag der Anmeldung:
**13.04.88 Patentblatt 88/15**

(84) Benannte Vertragsstaaten:
**AT BE CH DE ES FR GB IT LI SE**

(71) Anmelder: **Standard Elektrik Lorenz
Aktiengesellschaft
Lorenzstrasse 10
D-7000 Stuttgart 40(DE)**

(72) Erfinder: **Foth, Reinhard
Appelhof 13
D-5840 Schwerte(DE)**
Erfinder: **Girle, Hans-Dietrich
Péronnerstrasse 19
D-5990 Altone(DE)**
Erfinder: **Rohmund, Achim
Löttringserweg 22
D-5990 Altone 8(DE)**

(74) Vertreter: **Pohl, Heribert, Dipl.-Ing et al
Standard Elektrik Lorenz AG Patent- und
Lizenzwesen Postfach 30 09 29
D-7000 Stuttgart 30(DE)**

(54) **Strahlungsmessgerät zur Messung einer ionisierenden Strahlung mit einer an das Messgerät angeschlossenen Messsonde.**

(57) Eine an ein Strahlungsmeßgerät (1) zur Messung einer ionisierenden Strahlung angeschlossene Meßsonde (3) enthält neben einer Strahlungsdetektoranordnung (4), die unter der Einwirkung einer ionisierenden Strahlung (6) an ihrem Signalausgang (7) Zählimpulse erzeugt, einen Codeimpulsgenerator (15). Dieser erzeugt während eines vom Strahlungsmeßgerät (1) erzeugten Abrufsignales ein Impulstelegramm mit einem Sondencode, der an Codierelementen (24) in der Meßsonde eingestellt ist und die Meßsonde kennzeichnet. Eine Kalibrieranordnung (21) decodiert das Impulstelegramm und bildet daraus Kalibriersignale, mit denen das Strahlungsmeßgerät (1) auf die Eigenschaften der Meßsonde (3) eingestellt wird.

FIG.1

EP 0 263 387 A2

## Strahlungsmeßgerät zur Messung einer ionisierenden Strahlung mit einer an das Meßgerät angeschlossenen Meßsonde

Die Erfindung betrifft ein Strahlungsmeßgerät nach dem Oberbegriff des Anspruchs 1.

Für Strahlungsmeßgeräte zur Messung einer ionisierenden Strahlung ist eine hohe Meßgenauigkeit vorgeschrieben. Beispielsweise soll der von einem derartigen Strahlungsmeßgerät angezeigt Meßwert einer ionisierenden Strahlung nicht mehr als 5% vom tatsächlichen Wert der ionisierenden Strahlung am Meßort abweichen, wenn die Dosisleistung dieser Strahlung am Meßort größer als 2mR/h ist, und nicht mehr als 15% von dem tatsächlich am Meßort gemessenen Meßwert der ionisierenden Strahlung abweichen, wenn die Dosisleistung dieser Strahlung am Meßort weniger als 2mR/h beträgt. Die Wandlerkennlinien der in derartigen Strahlungsmeßgeräten zur Messung der ionisierenden Strahlung verwendeten Strahlungsdetektoren weichen jedoch erheblich mehr von der für diese Strahlungsdetektoren angegebenen Nennkennlinie ab. Dadurch ist es erforderlich, die Strahlungsmeßgeräte zusammen mit ihren darin enthaltenen Strahlungsdetektoren derart auf eine bestimmte Meßkennlinie abzugleichen, daß die geforderte Meßgenauigkeit für das Strahlungsmeßgerät erreicht wird.

Vielfach sind Strahlungsmeßgeräte zur Messung einer ionisierenden Strahlung so ausgebildet, daß an sie zusätzliche in einer Meßsonde enthaltene Strahlungsdetektoren angeschlossen werden können. Diese Strahlungsmeßgeräte sind dann umschaltbar für Messungen mit dem in dem Strahlungsmeßgerät enthaltenen Strahlungsdetektor oder zur Messung mit Strahlungsdetektoren, die in an das Strahlungsmeßgerät angeschlossenen Meßsonden enthalten sind. Im allgemeinen ist für jede Meßsondenart in dem Strahlungsmeßgerät ein eigener Meßbereich vorgesehen. In jedem dieser Meßbereiche muß bei angeschlossener zugehöriger Meßsonde die Meßkennlinie des Strahlungsmeßgerätes auf die vorgeschriebene Meßgenauigkeit eingestellt werden. Somit sind jedem Strahlungsmeßgerät bestimmte Meßsonden zugeordnet, die nicht für ein anderes Strahlungsmeßgerät verwendet werden dürfen. Bei der Verwendung dem Strahlungsmeßgerät nicht zugeordneter Meßsonden ist eine unzulässige Überschreitung der Meßgenauigkeit des Strahlungsmeßgerätes zu befürchten. Außerdem können mit dem Meßgerät falsche Messungen durchgeführt werden, wenn die Bedienungsperson an dem Strahlungsmeßgerät nicht den Meßbereich einstellt, der der an das Meßgerät angeschlossenen Meßsonde zugeordnet ist.

Aus der DE-PS 29 18 611 ist ein Strahlungsmeßgerät mit einer daran angeschlossenen Meßsonde zur Messung einer ionisierenden Strahlung bekannt, bei dem in der Meßsonde ein einstellbarer Widerstand als Teil einer Kalibrieranordnung des Strahlungsmeßgerätes angeordnet ist. Mittels einer Einstellung an diesem Kalibrierwiderstand kann die Abweichung der Wandlerkennlinie des in der Meßsonde verwendeten Strahlungsdetektors von der Nennkennlinie dieses Strahlungsdetektors kompensiert werden. Voraussetzung ist hier jedoch, daß in dem Strahlungsmeßgerät bereits eine Nenn-Meßkennlinie eingestellt ist. Der Einstellwiderstand in der Meßsonde ist über Verbindungsleitungen mit der Kalibrieranordnung in dem Strahlungsmeßgerät verbunden. Über diese Verbindungsleitungen können Störungen durch Streufelder in das Strahlungsmeßgerät gelangen, die die Strahlungsmessung ungünstig beeinflussen und die Ablesung der Meßanzeige stören. Außerdem ist es bei diesen Meßsonden immer noch erforderlich, daß der Benutzer des Strahlungsmeßgerätes den der Art der angeschlossenen Meßsonde entsprechenden Meßbereich an dem Strahlungsgerät einstellt. Es ist somit bei dem bekannten Meßgerät immer noch nicht ausgeschlossen, daß durch eine falsche Meßbereichswahl ein falscher Meßwert des zu messenden ionisierenden Strahlungsfeldes ermittelt wird.

Der Erfindung liegt deshalb die Aufgabe zugrunde, ein im Oberbegriff des Anspruchs 1 angegebenes Strahlungsmeßgerät mit einer daran angeschlossenen Meßsonde so auszubilden, daß unabhängig von der an das Meßgerät angeschlossenen Meßsonde die zu messende ionisierende Strahlung mit der erforderlichen Meßgenauigkeit gemessen und angezeigt wird. Diese Aufgabe wird nach der Erfindung durch die im Kennzeichen des Anspruchs 1 angegebenen Merkmale gelöst.

Bei einem erfindungsgemäßen Strahlungsmeßgerät befindet sich kein Teil der Kalibrieranordnung außerhalb des Gehäuses des Strahlungsmeßgerätes, so daß von daher keine Störungen in das Strahlungsmeßgerät gelangen können. Die Kalibrieranordnung in dem Strahlungsmeßgerät wird von der an das Strahlungsmeßgerät angeschlossenen Meßsonde über das Impulstelegramm eingestellt. Hierzu ist keine zusätzliche Leitung zwischen dem Strahlungsmeßgerät und der Meßsonde erforderlich. Mit dem Impulstelegramm können sowohl Daten über die Art der Meßsonde als auch über die Abweichung der Wandlerkennlinie der Meßsonde von deren Nennkennlinie übertragen werden. Die in dem Strahlungsmeßgerät angeordnete Kalibrieranordnung kann somit sowohl den für die Art der angeschlossenen Meßsonde zuständigen Bereich des Strahlungsmeßgerätes ermitteln und einstellen, als auch im Strahlungsmeßgerät die Kompensation der Abweichung der Wandlerkennlinie von der Nennkennlinie des Strahlungsdetektors einstellen. Der Benutzer eines derartigen Strahlungsmeßgerätes muß somit an dem Strahlungsmeßgerät keine die Art der angeschlossenen Meßsonde betreffenden Einstellungen mehr vornehmen, so daß dadurch verursachte Fehlmessungen ausgeschlossen sind.

Wird das Abrufsignal zur Übertragung des Impulstelegrammes der Meßsonde ebenfalls über die Meßsignalleitung von der Meßsonde zum Strahlungsmeßgerät übertragen, besteht der weitere Vorteil, daß außer den Versorgungsleitungen und der Meßsignalleitung keine weiteren Leitungen zwischen dem Strahlungsmeßgerät und der daran angeschlossenen Meßsonde erforderlich sind. Ist andererseits eine hohe Übertragungssicherheit der impulsförmigen Signale gefordert, kann es vorteilhaft sein, das Abrufsignal über eine von der Meßsignalleitung getrennte Steuerleitung zu übertragen, auf der dann gegebenenfalls weitere Steuer-oder Anzeigesignale erzeugt und übertragen werden können, wie den Unteransprüchen zu entnehmen ist.

In einer besonderen Ausgestaltung der Erfindung ist in der Meßsonde ein Anschlußsignalgeber angeordnet, dessen Ausgangssignal in dem Strahlungsmeßgerät, an das die Meßsonde angeschlossen ist, in einer Anschlußsignalerkennungsschaltung das Abrufsignal für das Impulstelegramm der Meßsonde erzeugt. Dadurch wird sichergestellt, daß das Strahlungsmeßgerät bei jedem Anschluß einer Meßsonde auf die Eigenschaften der angeschlossenen Meßsonde selbsttätig und unabhängig vom Benutzer eingestellt wird.

Weitere vorteilhafte Ausgestaltungen der Erfindung und insbesondere eine vorteilhafte Ausbildung eines Codeimpulsgenerators sind den Unteransprüchen zu entnehmen.

Die Erfindung wird nachfolgend anhand einiger vorteilhafter Ausführungsbeispiele näher erläutert. In den zugehörigen Zeichnungen zeigen

Figur 1 ein Blockschaltbild eines Strahlungsmeßgerätes mit einer daran angeschlossenen Meßsonde zur Messung einer ionisierenden Strahlung,

Figur 2 Diagramme a) und b) zu dem in Figur 1 dargestellten Strahlungsmeßgerät,

Figur 3 ein Blockschaltbild eines weiteren Strahlungsmeßgerätes mit einer daran angeschlossenen Meßsonde zur Messung einer ionisierenden Strahlung,

Figur 4 Diagramme a) bis c) zum Betriebsablauf des in Figur 3 dargestellten Strahlungsmeßgerätes,

Figur 5 ein Blockschaltbild einer Meßsonde mit einem Codeimpulsgenerator,

Figur 6 Diagramme a) bis g) zum Betriebsablauf der Ausgabe eines Impulstelegramms einer in Figur 5 dargestellten Meßsonde.

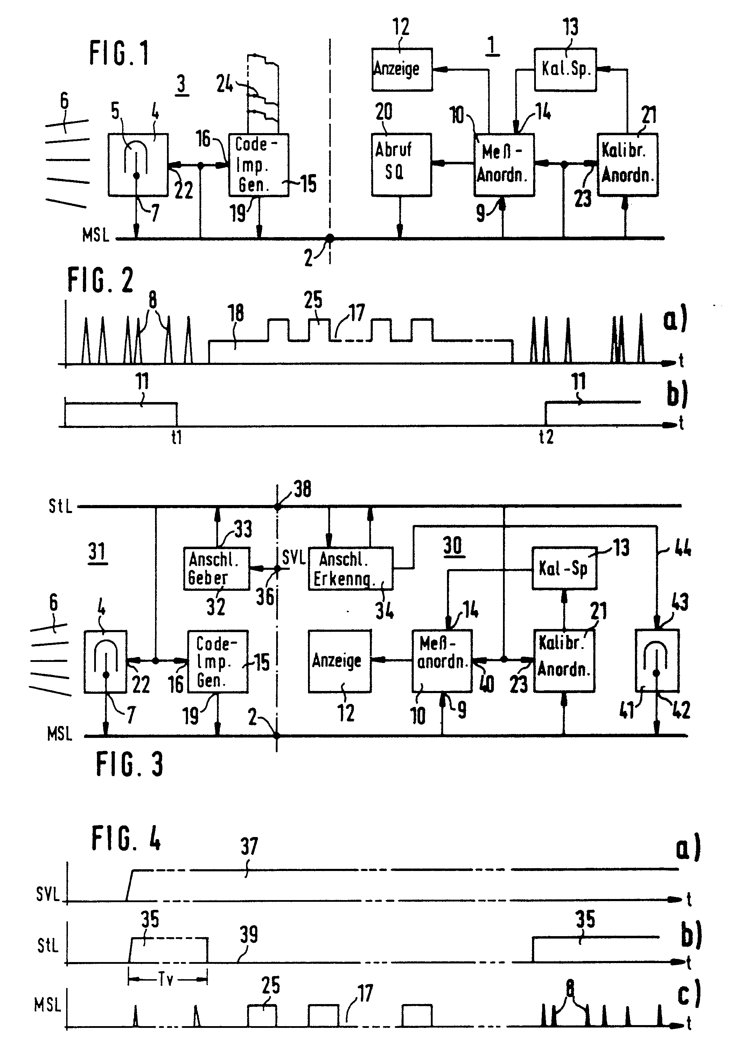

In Figur 1 ist in der Gestalt eines vereinfachten Blockschaltbildes ein Strahlungsmeßgerät 1 zur Messung einer ionisierenden Strahlung dargestellt. An dieses Strahlungsmeßgerät ist über einen Anschluß 2 einer Meßsignalleitung MSL eine Meßsonde 3 angeschlossen, in die sich die Meßsignalleitung MSL fortsetzt. Die Meßsonde 3 enthält eine Strahlungsdetektoranordnung 4 mit einem Strahlungsdetektor 5, der unter der Einwirkung einer ionisierenden Strahlung 6 zeitlich statistisch verteilte Zählimpulse erzeugt und über einen Ausgang 7 auf die Meßsignalleitung MSL überträgt. diese Zählimpulse , die im Diagramm a) der Figur 2 in der Gestalt von Nadelimpulsen 8 dargestellt sind, gelangen über die Meßsignalleitung MSL an einen Zähleingang 9 einer Meßanordnung 10 des Strahlungsmeßgerätes 1. Die Meßanordnung 10 mißt innerhalb bestimmter Zeitabschnitte 11 die Impulsrate der Zählimpulse 8 und bildet daraus einen an einer Anzeigeanordnung ablesbaren Meßwert der am Meßort der Meßsonde 3 zu messenden Größe der ionisierenden Strahlung 6.

Für die unterschiedlichen Arten von ionisierenden Strahlungen 6, beispielsweise $\alpha$-Strahlung, $\beta$-Strahlung, $\gamma$-Strahlung oder Röntgenstrahlung sind unterschiedliche Arten von Strahlungsdetektoren und damit unterschiedliche Arten von Meßsonden erforderlich, für die dann auch eine unterschiedliche Art der Aufbereitung der Zählraten in der Meßanordnung 10 des Strahlungsmeßgerätes erforderlich sind. Die Einstellung der Meßanordnung 10 erfolgt über Kalibriersignale, die in einem Kalibrierspeicher 13 des Strahlungsmeßgerätes gespeichert sind, und über einen Kalibriereingang 14 der Meßanordnung 10 die Art der Meßwertaufbereitung der Meßanordnung einstellen.

Zur Kennzeichnung der Sondenart enthält die Meßsonde einen Codeimpulsegenerator 15, der beim Empfang eines Abrufsignales 18 an seinem Steuereingang 16 ein Impulstelegramm 17 an seinen Signalausgang 19 erzeugt und auf die Meßsignalleitung MSL überträgt. Das Abrufsignal 18 und das Impulstelegramm 17 sind ebenfalls im Diagramm a) der Figur 2 dargestellt. Zur Erzeugung des Abrufsignales 18 und zum Empfang und zur Auswertung des Impulstelegrammes 17 enhält das Strahlungsmeßgerät 1 eine Abrufsignalanordnung 20 und eine Kalibrieranordnung 21. Zum Abruf eines Impulstelegrammes steuert die Meßanordnung 10 die Abrufsignalanordnung derart, daß das Abrufsignal 18 (Diagramm a) der Figur 2) zwischen das Ende t1 eines ersten Zeitabschnitts 11 für die Messung einer Zählimpulrate und den Anfang t2 eines nachfolgenden zweiten Zeitabschnittes 11 zur Messung der Zählimpulsrate fällt, wie in den Diagrammen a) und b) der Figur 2 dargestellt ist. Das Abrufsignal gelangt außer an den Steuereingang des Codeimpulsgenerators 15 an einen Sperreingang 22 der Strahlungsdetektoranordnung 4 und an einen Einschalteingang 23 der Kalibrieranordnung 21. Der Signalausgang 7 der Strahlungsdetektoranordnung 4 wird dadurch gesperrt, während die Kalibrieranordnung dadurch für den Empfang und die Ausswertung des Impulstelegramms 17, das der Codeimpulsgenerator erzeugt und dem Abrufsignal 18 auf der Meßsignalleitung MSL überlagert, wirksam geschaltet wird. Das Impulstelegramm enhält einen Sondencode, der an Codierelemente 24 der Meßsonde 3 eingestellt ist und der die Art der Meßsonde und die Abweichung der Wandlerkennlinie des Strahlungsdetektor von dessen Nennkennlinie kennzeichnet. Im dargestellten Ausführungsbeispiel ist der Sondencode der an das Meßgerät 1 angeschlossen Meßsonde 3 durch die Anzahl der Codeimpulse 25 des Impulstelegrammes 17 gegeben. Die Kalibrieranordnung wertet den mit dem Impulstelegramm 17 übertragenen Sondencode aus, bildet daraus die Kalibrierbefehle und speichert diese Kalibrierbefehle in dem Kalibrierspeicher 13.

In einer besonderen Ausbildung des Strahlungsmeßgerätes 1 sind die Anordnungen 13, 14, 20 und 21 Bestandteile eines in dem Strahlungsmeßgerät 1 angeordneten Mikroprozessors.

Das in Figur 3 in einem Blockschaltbild dargestellte Meßgerät 30 mit einer daran angeschlossenen Meßsonde 31 enthält außer der Meßsignalleitung MSL eine Steuerleitung StL, an die in der Meßsonde 31 der Signalausgang 33 eines Anschlußsignalgebers 32 angeschlossen ist und an die in dem Strahlungsmeßgerät 30 eine Anschlußsignalerkennungsanordnung 34 angeschlossen ist. Mit den in Figur 1 dargestellten Baugruppen übereinstimmende Baugruppen der Figur 3 sind mit dem gleichen Bezugszeichen kennzeichnet.

Der Anschlußsignalgeber 32 erzeugt auf der Steuerleitung StL ein Anschlußsignal 35, sobald über den Stromversorgungsanschluß 36 einer Stromversorgungsleitung SVL, die von dem Strahlungsmeßgerät 30 in die Meßsonde 31 geführt ist, eine Betriebsspannung 37 auftritt, wie in den Diagrammen a) und b) der Figur 4 schematisch dargestellt ist. Die Anschlußsignalerkennungsanordnung 34 empfängt das über die Steuerleitung StL und den Anschluß 38 übertragene Anschlußsignal 35 und erzeugt im dargestellten Ausführungsbeispiel nach einer Verzögerungszeit Tv auf der Steuerleitung StL ein Abrufsignal 39 der Gestalt, daß sie das Anschlußsignal 35 während der Dauer des Abrufsignales unterdrückt (Diagramm b) der Figur 4). Dieses Abrufsignal sperrt wiederum den Signalausgang 7 der Strahlungsdetektoranordnung 4 der Meßsonde 31 und schaltet deren Codeimpulsgenerator 15 ein. Ebenso wird in dem Strahlungsmeßgerät 30 die Kalibrieranordnung 21 während der Dauer des Abrufsignales 39 wirksam geschaltet und die Meßanordnung 10 an einem Steuereingang für die Dauer des Abrufsignales 39 unwirksam geschaltet. Die Codeimpulse des von dem Codeimpulsgebers 15 während der Dauer des Abrufsignales 39 erzeugten Impulstelegrammes werden anstelle der Zählimpulse auf der Meßsignalleitung MSL an die Kalibrieranordnung 21 des Strahlungsmeßgerätes 30 übertragen und in Kalibriersignale für die Einstellung der Meßanordnung 10 umgewandelt, wie im Diagramm c) der Figur 4 schematisch dargestellt ist. Nach Ablauf des Abrufsignales 39 erscheint auf der Steuerleitung StL wieder das Anschlußsignal 35, das jedoch erst wieder für die Anschlußsignalerkennungsanordnung 34 wirksam wird, wenn es unterbrochen wurde.

Das in Figur 3 dargestellte Ausführungsbeispiel eines Strahlungsmeßgerätes 30 enthält außerdem eine weitere Strahlungsdetektoranordnung 41, deren Signalausgang 42 durch ein Sperrsignal an einem Sperreingang 43 der Strahlungsdetektoranordnung 41 gesperrt werden kann. Ein derartiges Sperrsignal erzeugt die Anschlußsignalerkennungsanordnung 34 auf einer Sperrleitung 44 dann, wenn sie ein Anschlußsignal empfängt und solange, bis nach Erzeugung eines Abrufsignales 39 das Anschlußsignal erneut unterbrochen wird.

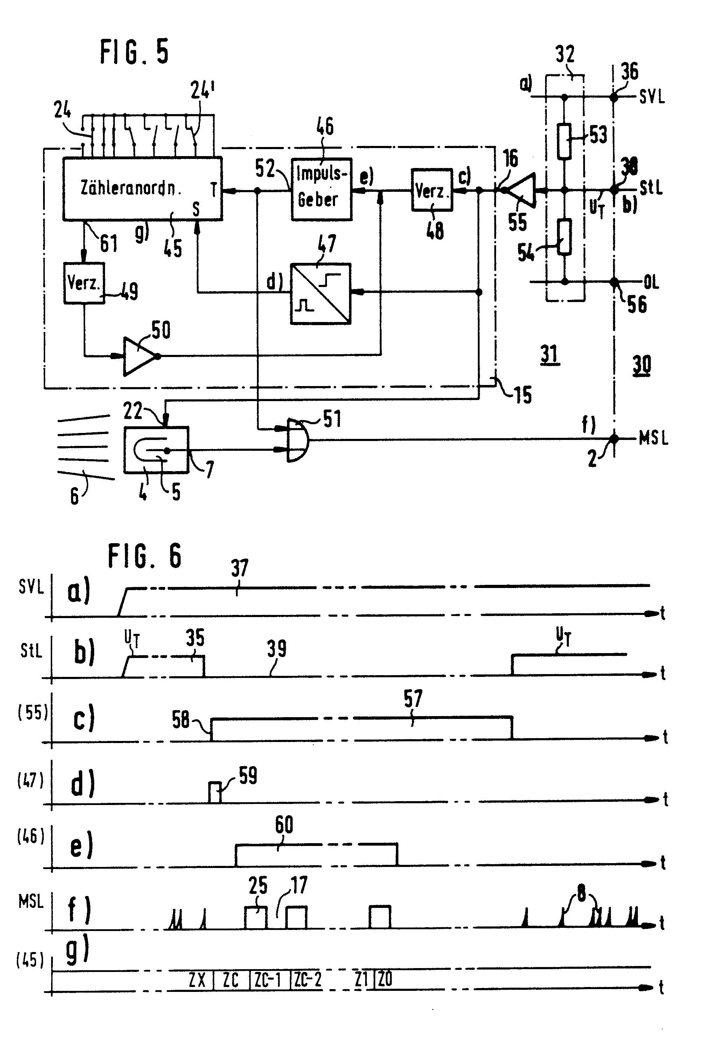

Die Figur 5 zeigt ein ausführlicheres Blockschaltbild einer Meßsonde 31, die beispielsweise bei der Darstellung der Figur 3 an das Strahlungsmeßgerät 30 angeschlossen ist. Die Meßsonde ist über die Stromversorgungsleitungen SVL und SOL, über die Steuerleitung StL und über die Meßsingalleitung MSL an ein in Figur 5 nicht näher dargestelltes Strahlungsmeßgerät 30 angeschlossen. Der Codeimpulsgenerator 15 der Meßsonde 31 enthält eine Zähleranordnung 45, eine Impulsgeberanordnung 46, einen flankengesteuerten Impulsgeber 47, zwei Verzögerungsanordnungen 48 und 49, sowie eine Inverterschaltung 50. Außerdem enthält die Meßsonde 31 eine Strahlungsdetektoranordnung 4 mit einer Signalentkopplungsschaltung 51, die die Signalausgänge 7 der Strahlungsdektoranordnung 22 und 52 der Impulsgeberanordnung von der Meßsignalleitung MSL entkoppelt, sowie einen aus einem Spannungsteiler mit den Widerständen 53 und 54 gebildeten Anschlußsignalgeber 32 und einen zwischen diesen Anschlußsignalgeber und dem Steuereingang 16 des Codeimpulsgenerators 15 angeordneten Inverter 55.

Der Abruf eines Impulstelegramms zur Übertragung des Sondencodes der Meßsonde 31 wird anhand der Diagramme a) bis g) der Figur 6 erläutert. Der Sondencode der Meßsonde 31 ist an den Codierelemeten 24 und 24' der Meßsonde 31 eingestellt. Der an den als Leiterbrücken ausgebildeten Codierelementen 24 eingestellte Teil des Sondencodes kennzeichnet die Art der Meßsonde, insbesondere bezüglich des Typs des in der Strahlungsdetektoranordnung 4 verwendeten Strahlungsdetektors 5. Die als Codierschalter ausgebildeten Codierelemente 24' sind dazu vorgesehen, die Abweichung der Wandlerkennlinie des in der Meßsonde 31 verwendeten Strahlungsdetektors 5 von dessen Nennkennlinie anzuzeigen.

Wird die Meßsonde 31 an den Anschlüssen 2, 36, 38 und 56 an das Strahlungsmeßgerät 30 angeschlossen, tritt nach dem Einschalten des Strahlungsmeßgerätes 30 zwischen den Stromversorgungsanschlüssen 36 und 56 die auf den Stromversorgungsleitungen SVL und SOL übertragene Betriebsspannung 37 (Diagramm a)) auf, die auf der Steuerleitung StL über die Widerstände 53 und 54 des Spannungsteilers des Anschlußsignalgebers 32 eine Gleichspannung $U_T$ erzeugt. Diese Spannung $U_T$ wird als Anschlußsignal 35 über die Steuerleitung in das Strahlungsmeßgerät 30 übertragen und löst dort nach einer Verzögerungszeit Tv das Abrufsignal 39 aus, das darin besteht, daß im dargestellten Ausführungsbeispiel das Strahlungsmeßgerät 30 die Steuerleitung StL auf Bezugspotential schaltet (Diagramm b)). Die Inverterschaltung 55 wandelt dieses Abrufsignal 39 in ein im Diagramm c) dargestelltes Schaltsignal 56 um, das den Codeimpulsgenerator 12 einschaltet und den Signalausgang 7 der Strahlungsdetektoranordnung 4 am Sperreingang 22 sperrt. Die Vorderflanke 58 dieses Schaltsignales 56 wird in dem flankengesteuerten Impulsgeber 47 in ein Setzsignal 59 umgewandelt, das die Zähleranordnung 45 an seinem Setzeingang S von einem beliebigen Zählerstand zx (Diagramm g)) auf einen dem Sondencode, der an den Codierelementen 24 und 24' eingestellt ist, entsprechenden Zählerstand zc einstellt, wie im Diagramm g) schematisch dargestellt ist.

Nach einer für das Setzen der Zähleranordnung 45 ausreichenden Verzögerungszeit erscheint das Schaltsignal 57 am Ausgang der Verzögerungsanordnung 48 als Schaltsignal 60 (Diagramm e)) zum Einschalten der Impulsgeberanordnung 46. Die von der Impulsgeberanordnung 46 dadurch erzeugten Impulse gelangen als Codeimpulse 25 auf die Meßsignalleitung MSL und als Taktimpulse an den Takteingang T der Zähleranordnung 45, und zwar solange, bis die abwärtszählende Zähleranordnung den Zählerstand z0 erreicht und an ihrem Zählerausgang 61 ein Ausgangssignal erzeugt, das in der Verzögerungsanordnung 49 um etwa eine Impulslänge der Codeimpulse 25 verzögert und in der Inverterschaltung 50 invertiert wird. Dieses invertierte Signal sperrt die Impulsgeberanordnung 46. Das Impulstelegramm 17 das der Codeimpulsgenerator 15 im dargestellten Ausführungsbeispiel ausgibt, besteht somit aus derjenigen Anzahl von Codeimpulsen, die als Anfangszählerstand der Zähleranordnung 46 an den Codierelementen 24 und 24' eingestellt ist und mittels eines Setzsignales 59 am Setzeingang S der Zähleranordnung in dieser eingestellt wird. Am Ende des Abrufsignales 39 erscheint auf der Steuerleitung StL wieder die Gleichspannung $U_T$ des aus den Widerständen 53 und 54 gebildeten Spannungsteilers, wodurch das Schaltsignal am Ausgang des Inverters 55 beendet wird.

Eine in Figur 5 dargestellte Meßsonde kann an jedes beliebige Strahlungsmeßgerät, das eine Kalibrieranordnung mit einem zur Auswertung des Impulstelegrammes der Meßsonde geeigneten Dekoder enthält, angeschlossen werden, da sich das Strahlungsmeßgerät nach der Decodierung des Impulstelegrammes auf die Eigenschaften der Meßsonde einstellt. Andererseits ist eine in Figur 5 dargestellte Meßsonde auch an Strahlungsmeßgeräte anschließbar, die keine derartige Decodiereinrichtung enthalten, nämlich dann, wenn nach bisherigem Brauch das Meßgerät vom Benutzer auf die Art der Meßsonde eingestellt wird und unter den Meßsonden der gleichen Art die Meßsonde ausgesucht wird, die eine für eine genaue Messung mit dem Strahlungsmeßgerät geeignete Wandlerkennlinie ihres Strahlungsdetektors 5 aufweist.

## Ansprüche

1. Strahlungsmeßgerät zur Messung einer ionisierenden Strahlung
-mit einer an das Strahlungsmeßgerät angeschlossenen Meßsonde, in der ein Strahlungsdetektor unter der Einwirkung einer ionisierenden Strahlung auf einer Meßsignalleitung Zählimpulse einer von der Dosisleistung der ionisierenden Strahlung abhängigen Zählimpulsrate erzeugt und in der eine die Kalibrierung des Meßgerätes beeinflussende Einrichtung enthalten ist,
-und mit einer kalibrierbaren Meßanordnung, die eingangsseitig an die Meßsignalleitung angeschlossen ist,

**dadurch gekennzeichnet ,**

-daß die die Kalibrierung des Strahlungsmeßgerätes (1, 30) beeinflussende Einrichtung der Meßsonde (3, 31) ein Codeimpulsgenerator (15) ist, der beim Empfang eines Abrufsignales (18, 39) ein Impulstelegramm (17) mit einem die Meßsonde kennzeichnenden Sondencode auf eine Übertragungsleitug ausgibt,

-und daß eine im Strahlungsmeßgerät an die Übertragungsleitung angeschlossene Kalibrieranordnung (21) das Impulstelegramm decodiert und in Kalibriersignale zur Einstellung der kalibrierbaren Meßanordnung (10) umsetzt und in einem Kalibrierspeicher (13) speichert.

2. Strahlungsmeßgerät nach Anspruch 1, dadurch gekennzeichnet,

-daß die Übertragungsleitung für das Impulstelegramm (17) die Meßsignalleitung (MSL) ist

-und daß an die Meßsignalleitung angeschlossene Zählimpulsquellen (Strahlungsdetektoranordnung 4) während der Dauer der Übertragung des Impulstelegrammes gesperrt sind.

3. Strahlungsmeßgerät nach Anspruch 1 oder 2, dadurch gekennzeichnet,

-daß die Meßsonde (31) einen Anschlußsignalgeber (32) enthält,

-daß ein vom Anschlußsignalgeber im an das Strahlungsmeßgerät (30) angeschlossenen Zustand erzeugtes Anschlußsignal (35) an das Strahlungsmeßgerät übertragen wird

-und daß eine im Strahlungsmeßgerät angeordnete Anschlußsignalerkennungsanordnung (34) beim Empfang eines Anschlußsignales der Meßsonde das Abrufsignal (39) erzeugt.

4. Strahlungsmeßgerät nach einem der Ansprüche 1 bis 3, dadurch gekennzeichnet, daß die Meßsonde (3, 31) Codierelemente (24, 24') zur Einstellung des Sondencodes der Meßsonde enthält.

5. Strahlungsmeßgerät nach einem der Ansprüche 1 bis 4, dadurch gekennzeichnet, daß das Abrufsignal (18) ein Gleichspannugnssignal auf der Meßsignalleitung (MSL) ist, dem das Impulstelegramm (17) des Codeimpulsgenerators (15) der Meßsonde (3) überlagert ist.

6. Strahlungsmeßgerät nach einem der Ansprüche 1 bis 4, dadurch gekennzeichnet, daß das Abrufsignal (39) ein Signal auf einer Steuerleitung (StL) ist, die zwischen dem Strahlungsmeßgerät (30) und der Meßsonde (31) angeordnet ist.

7. Strahlungsmeßgerät nach Anspruch 6, dadurch gekennzeichnet, daß der Anschlußsignalgeber (32) ein an die Steuerleitung (StL) angeschlossener Spannungsteiler (53, 54) der Betriebsspannung (37) der Meßsonde (31) ist.

8. Strahlungsmeßgerät nach Anspruch 6 oder 7, dadurch gekennzeichnet,

-daß der Codeimpulsgenerator (15) der Meßsonde (31) eine Zähleranordnung (45) enthält, die zur Ausgabe des Impulstelegrammes (17) der Meßsonde mittels in der Meßsonde angeordneter Codierelemente (24, 24') voreingestellt ist,

-daß der Takteingang (T) der Zähleranordnung an den Taktausgang einer ausgangsseitig an die Meßsignalleitung (MSL) angeschlossenen Impulsgeberanordnung (46) des Codeimpulsgenerators angeschlossen ist,

-und daß vom Zählerstand (z0) der Zähleranordnung gesteuerte Ausgänge (61) der Zähleranordnung die Impulsgeberanordnung ein- oder ausschalten.

FIG.1

FIG.2

a)

b)

FIG.3

FIG.4

a)

b)

c)

# FIG. 5

# FIG. 6

SVL a) 37

StL b) $U_T$ 35 39 $U_T$

(55) c) 58 57

(47) d) 59

(46) e) 60

MSL f) 25 17 8

(45) g) ZX | ZC | ZC-1 | ZC-2 | Z1 | Z0

R. Foth 2-38-2